# DEMANDE DE BREVET EUROPEEN

(11) **EP 1 288 167 A1**
(43) Date de publication de la demande: **05.03.2003**
(21) Numéro de dépôt: 02356160.8
(22) Date de dépôt: 23.08.2002
(51) Int. Cl.: C02F 3/04

(54) **Installation et procédé d'épuration d'effluents vinicoles**

(30) Priorité: 31.08.2001 FR 0111345
(71) Demandeur: Alba SA, 69160 Tassin La Demi Lune (FR)
(72) Inventeur: Remond, Gaetan, 69004 Lyon (FR)
(74) Mandataire: Maureau, Philippe

(57) **Abrégé**

La présente invention se rapporte à une installation pour épurer des effluents vinicoles comprenant :
- une cuve de réception (1) pour effluents vinicoles,
- un moyen d'aération des effluents contenus dans la cuve de réception (1),
- un moyen pour transférer, de façon séquentielle, les effluents de la cuve de réception (1) dans sa partie haute, au-dessus d'un niveau (6) prédéterminé, pour transférer lesdits effluents dans une cuve de recyclage (9),
- un circuit de recirculation associé à la cuve de recyclage (9), comportant une pompe de recyclage (10) pour faire circuler les effluents vers un filtre gravillonnaire (13) servant de support à un biofilm, les effluents filtrés étant récupérés à la sortie du filtre gravillonnaire (13) et ramenés dans la cuve de recyclage (9),
- un moyen d'aération complémentaire associé à la cuve de recyclage (9) pour aérer les effluents contenus dans celle-ci,
- et un moyen d'évacuation des effluents traités de la cuve de recyclage (9), agencé dans sa partie haute, au-dessus d'un niveau (20) prédéterminé.

## Description

La présente invention se rapporte à une installation pour épurer les effluents vinicoles et un procédé d'épuration desdits effluents vinicoles. Ces effluents vinicoles sont en général considérés comme polluants et il est nécessaire de les dégrader par différents moyens pour limiter ou réduire les risques de pollution. Pour les petites unités de production, produisant par exemple de l'ordre de 500 hectolitres par an de vin, il n'est pas envisageable économiquement, d'une part, d'investir individuellement dans une station d'épuration conventionnelle ou d'autre part, de se raccorder directement au réseau d'eaux usées. En effet, la quantité de charges polluantes présentes dans les effluents vinicoles impose aux producteurs soit un prétraitement desdits effluents, soit une participation aux frais de fonctionnement de la station urbaine d'épuration. La hauteur de cette participation est calculée en fonction de la quantité d'effluents rejetés et représente en général pour les petites unités de production un investissement trop lourd.

Le regroupement de différentes petites unités de production pour traiter ensemble les effluents vinicoles semble également peu intéressant et très difficile à réaliser.

On connaît actuellement pour de telles petites unités de production, deux modes de traitement des effluents vinicoles.

Le premier mode de traitement consiste à épandre lesdits effluents sur des sols en utilisant les capacités auto-épuratrices desdits sols par les microorganismes. Pour pallier des conditions climatiques défavorables, il est nécessaire de disposer d'un bassin de stockage tampon, avant l'épandage par une citerne. Les contraintes rencontrées apparaissent dans les coûts de fonctionnement élevés, notamment en main d'oeuvre, et dans la nécessité d'être à proximité de terrains cultivés et éligibles pour l'épandage. Tous les sols ne sont pas aptes à digérer les effluents vinicoles et ne se prêtent pas, par conséquent, à un tel épandage. En outre, l'épandage est interdit dans les secteurs inondables, dans les zones de captage et sur les terrains à forte pente. Les odeurs émises lors des opérations d'épandage ainsi qu'une pression de l'opinion publique ne sont pas, par ailleurs, de nature à favoriser ce mode de traitement.

Le second mode de traitement est le stockage aéré qui consiste en une dégradation biologique progressive des effluents vinicoles, en cuve, par des organismes dont le développement est favorisé par un apport d'oxygène. Ce mode de traitement nécessite des cuves de grand volume et, par conséquent, une emprise au sol importante et génère des odeurs en cas de stockage ouvert. En outre, ce mode de traitement nécessite une gestion des boues générées par le stockage et la dégradation des charges organiques par les microorganismes. La nécessité de stocker l'ensemble des effluents vinicoles de vendanges et de soutirage induit par conséquent un investissement extrêmement lourd.

Le but de la présente invention vise à réaliser une installation d'épuration d'effluents vinicoles dont la simplicité de réalisation et de fonctionnement ne nécessite qu'un investissement réduit et acceptable pour des petites unités vinicoles.

Un autre but de la présente invention vise un procédé d'épuration d'effluents vinicoles, lequel est mis en oeuvre de façon extrêmement simple, tout en respectant les contraintes législatives et normatives en matière de rejets d'effluents traités.

Selon l'invention, l'installation pour épurer des effluents vinicoles comprend :
- une cuve de réception pour effluents vinicoles,
- un moyen d'aération des effluents contenus dans la cuve de réception,
- un moyen pour transférer, de façon séquentielle, les effluents de la cuve de réception dans sa partie haute, au-dessus d'un niveau prédéterminé, pour transférer lesdits effluents dans une cuve de recyclage,
- un circuit de recirculation associé à la cuve de recyclage, comportant une pompe de recyclage pour faire circuler les effluents vers un filtre gravillonnaire servant de support à un biofilm, les effluents filtrés étant récupérés à la sortie du filtre gravillonnaire et ramenés dans la cuve de recyclage,
- un moyen d'aération complémentaire associé à la cuve de recyclage pour aérer les effluents contenus dans celle-ci,
- et un moyen d'évacuation des effluents traités de la cuve de recyclage, agencé dans sa partie haute, au-dessus d'un niveau prédéterminé.

Selon un exemple de réalisation de l'installation conforme à l'invention, le filtre gravillonnaire est un filtre à pouzzolane, dont la granulométrie est comprise entre 6 et 10 mm.

Selon un mode de réalisation, l'installation conforme à l'invention, le moyen d'aération comprend une pompe à aspiration directe située dans la partie basse de la cuve de réception avec une conduite de refoulement dirigée dans cette même cuve de réception, ladite conduite de refoulement comportant un Venturi à faible débit au niveau duquel de l'air est admis.

Selon un exemple de réalisation de l'installation conforme à l'invention le moyen d'aération complémentaire est réalisé avec une conduite de dérivation connectée sur le circuit de récirculation en amont du filtre gravillonnaire et dirigé dans la cuve de recyclage, ladite conduite de dérivation comportant un Venturi à faible débit, au niveau duquel de l'air est admis, et ledit circuit de recirculation aspirant les effluents dans la partie basse de la cuve de recyclage.

Selon l'invention, le procédé d'épuration d'effluents vinicoles consiste à :
- récupérer des effluents vinicoles dans la cuve de réception,
- laisser reposer et décanter et le cas échéant aérer au préalable les effluents vinicoles dans la cuve de réception,
- transférer de façon séquentielle une partie des effluents en partie haute de la cuve de réception vers une cuve de recyclage,
- aérer le cas échéant les effluents dans la cuve de recyclage,
- puiser pendant plusieurs cycles de traitement successifs une partie des effluents, en partie basse de la cuve de recyclage, pour alimenter un filtre gravillonnaire servant de support à un biofilm,
- récupérer les effluents filtrés dans la cuve de recyclage,
- laisser décanter les effluents dans la cuve de recyclage,
- et évacuer une partie des effluents traités en partie haute de la cuve de recyclage.

Dans la présente description, il est fait usage de différents termes dont la définition est précisée ci-après.

Par "effluents vinicoles", il faut entendre les effluents vinicoles bruts correspondants à des eaux usées vinicoles du type résidus de cuve liquides, eaux de nettoyage ou, résidus de soutirage ou autres, mis à part les lies de vins.

Par "traitement", il convient d'entendre, de façon générale, une dépollution des eaux usées vinicoles avant un rejet en milieu naturel.

Par "moyen d'aération" il convient d'entendre un moyen permettant d'injecter de l'air dans les effluents vinicoles stockés de façon à obtenir un brassage et une oxygénation desdits effluents, ladite oxygénation permettant ainsi de dégrader une partie des charges polluantes. Pour le terme "débit en m³/h", se rapportant aux pompes, il faut entendre un débit liquide théorique calculé/mesuré sous une pression indiquée.

Par biofilm, on entend la biomasse composée de micro organismes épurateurs fixée sur le matériau de garnissage du filtre gravillonnaire.

Par DCO, on entend la demande chimique en oxygène, renseignant sur la consommation globale à chaud de l'oxygène du dichromate de potassium et représentative de la majeure partie des composés organiques ainsi que des sels minéraux oxydables.

Par stabilisation aérobie, on entend le procédé destiné à la réduction de la teneur en matière organique du biofilm, aussi appelé digestion aérobie, consistant, par une aération prolongée du biofilm, à poursuivre le développement de micro organismes aérobies au-delà de la période de synthèse des cellules et d'épuisement de substrat jusqu'à réaliser leur auto-oxydation.

La présente installation d'épuration conforme à l'invention présente l'avantage d'une simplicité technique remarquable, d'une part, et un coût de réalisation de même que des frais d'entretien réduits.

Par ailleurs, l'installation d'épuration conforme à l'invention ne présente qu'un faible encombrement. Les cuves de réception et de recyclage d'un volume relativement faible sont enterrées sans difficulté. Un autre avantage réside dans un entretien quasi nul du filtre gravillonnaire et dans l'absence de déchets sous forme de boue liés à la dégradation de charges organiques polluantes.

Un autre avantage de l'installation conforme à l'invention réside en l'homogénéisation dans la cuve de réception des effluents vinicoles produits pendant une période d'environ quatre jours. Cette homogénéisation correspondant à un mélange d'effluents présentant divers degrés polluants, permet d'écrêter de fortes concentrations polluantes. Cet écrêtage est accentué le cas échéant par l'aération des effluents séjournant environ quatre jours dans la cuve de réception, et par une décantation préalablement au transfert vers la cuve de recyclage.

Un avantage supplémentaire de l'installation conforme à l'invention réside dans le fait que ses éléments constitutifs peuvent être montés et assemblés par les utilisateurs eux-mêmes sans intervention d'une entreprise extérieure, ce qui réduit considérablement les investissements dans ce domaine.

D'autres caractéristiques et avantages ressortiront de la description détaillée donnée ci-après à titre d'exemples non limitatifs illustrés par le dessin dans lequel :
- la figure 1 est une représentation d'un exemple de réalisation d'une installation d'épuration conforme à l'invention.
- la figure 2 est une représentation schématique d'un autre exemple de réalisation d'une installation d'épuration conforme à l'invention.

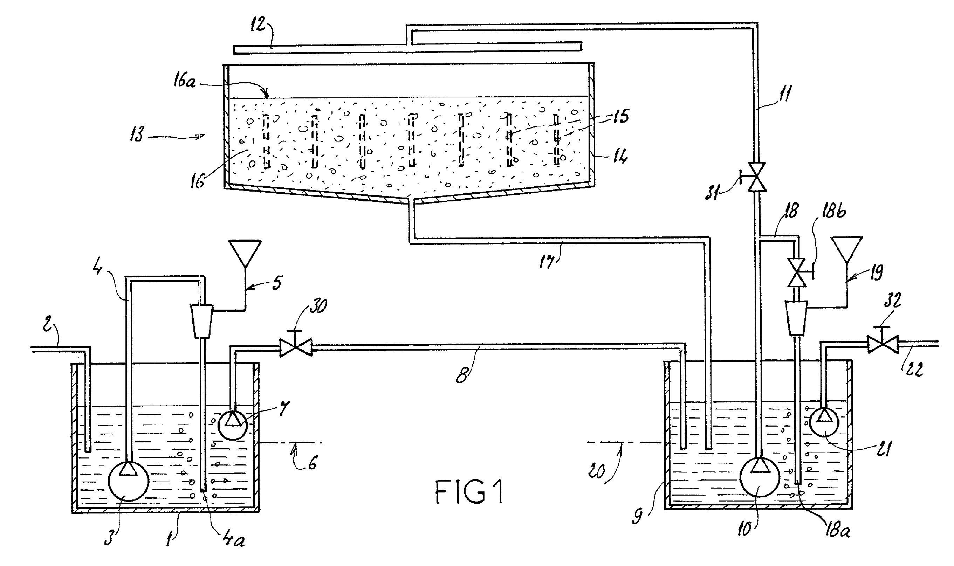

L'installation pour épurer des effluents vinicoles représentée à la fig. 1 comprend une cuve de réception 1 recevant les effluents vinicoles liquides par l'intermédiaire d'une conduite de remplissage 2. La cuve 1 est associée à un moyen d'aération des effluents vinicoles. Ce moyen d'aération est constitué d'une pompe d'aération 3, d'une conduite d'aération 4 et d'un Venturi 5 à faible débit, au niveau duquel l'air est admis dans la conduite d'aération 4. Cette dernière plonge de préférence jusque dans la partie basse de la cuve de réception 1 et permet ainsi d'y injecter de l'air mélangé à des effluents vinicoles aspirés par la pompe d'aération 3. La circulation des effluents vinicoles à travers la pompe 3 et la conduite d'aération 4 permet également d'obtenir un brassage continu desdits effluents stockés dans la cuve de réception 1.

Le Venturi 5 à faible débit est connu en tant que tel.

L'installation comporte également un moyen de transfert aspirant de façon séquentielle les effluents de la cuve de réception 1 dans sa partie haute au-dessus d'un niveau 6 de remplissage de la cuve de réception 1. Le moyen de transfert comprend, par exemple, une pompe de transfert 7 qui évacue, par séquence, le volume de liquide situé au-dessus du niveau 6.

A titre de variante, le moyen de transfert peut également être réalisé avec un écoulement gravitaire, à partir d'une différence de niveau entre les cuves 1 et 9.

Le moyen de transfert comprend également une conduite de transfert 8 par laquelle les effluents refoulés par la pompe 7 de transfert sont amenés dans une cuve de recyclage 9.

L'installation conforme à l'invention comporte également un circuit de recirculation associé à la cuve de recyclage 9. Ce circuit de recirculation comprend une pompe de recyclage 10 aspirant les effluents vinicoles dans la partie basse de la cuve de recyclage 9 pour les refouler dans une conduite de recyclage 11.

L'installation comprend également un filtre gravillonnaire 13 servant de support à un biofilm. Ce filtre gravillonnaire 13 est disposé sous le moyen de répartition 12 de manière à être alimenté en effluents vinicoles par ce dernier.

Le filtre gravillonnaire 13 est par exemple constitué d'une enceinte cylindrique 14 pourvue d'ouïes d'aération 15 sur toute sa périphérie. D'autres ouvertures d'aération peuvent également être envisagées sans sortir du cadre de la présente invention.

L'enceinte 14 contient un matériau 16 de garnissage servant de support à un biofilm. Ce matériau 16 est par exemple de la pouzzolane dont la granulométrie est comprise entre 6 et 10 mm. Le matériau 16 de garnissage présente donc une surface supérieure 16a susceptible d'être arrosée de façon homogène en effluents vinicoles grâce à un moyen de répartition 12 monté sur l'extrémité de la conduite de recyclage 11 située au-dessus du filtre gravillonnaire 13.

Les effluents vinicoles filtrés et traités sont alors récupérés à la sortie du filtre gravillonnaire 13 situé dans sa partie basse et ramenés dans la cuve de recyclage 9 par l'intermédiaire d'une conduite de récupération 17.

Le filtre gravillonnaire 13 est ainsi alimenté en effluents vinicoles à partir de la cuve de recyclage 9 par l'intermédiaire de la pompe de recyclage 10 associée à la conduite de recyclage 11 et à un moyen de répartition 12. La pompe de recyclage 10 aspire de préférence les effluents vinicoles dans la partie basse de la cuve de recyclage 9.

L'installation conforme à l'invention comporte également un moyen d'aération complémentaire associé à la cuve de recyclage 9 pour aérer les effluents contenus dans celle-ci. Le moyen d'aération complémentaire est réalisé avec une conduite de dérivation 18 connectée sur le circuit de recirculation et, en particulier, sur la conduite de recyclage 11, en amont du filtre gravillonnaire 13. La conduite de dérivation 18 est dirigée dans la cuve de recyclage 9 de manière à ramener une partie des effluents aspirés par la pompe de recyclage 10 dans ladite cuve de recyclage 9. La conduite de dérivation 18 débouche, de préférence, dans la partie basse de la cuve de recyclage 9 et comporte un second Venturi 19 à faible débit, au niveau duquel l'air est admis, de manière à aérer la partie des effluents vinicoles qui sont réinjectés dans la cuve de recyclage 9 par l'intermédiaire de ladite conduite de dérivation 18. Le niveau 20 de remplissage de la cuve de recyclage 9 correspond au niveau de remplissage supérieur de la cuve de recyclage 9 après l'évacuation des eaux traitées, et avant un transfert suivant d'effluents provenant de la cuve de réception 1.

L'installation pour épurer les effluents vinicoles comprend également un moyen d'évacuation des effluents traités à partir de la cuve de recyclage 9, agencé dans sa partie haute. Le moyen d'évacuation comprend par exemple une pompe d'évacuation 21 aspirant par séquence le volume liquide situé au-dessus du niveau 20 dans la cuve de recyclage 9 et une conduite d'évacuation 22 par laquelle les effluents aspirés sont refoulés vers l'extérieur de la cuve de recyclage 9. La conduite d'évacuation 22 permet par exemple de rejeter les effluents vinicoles traités.

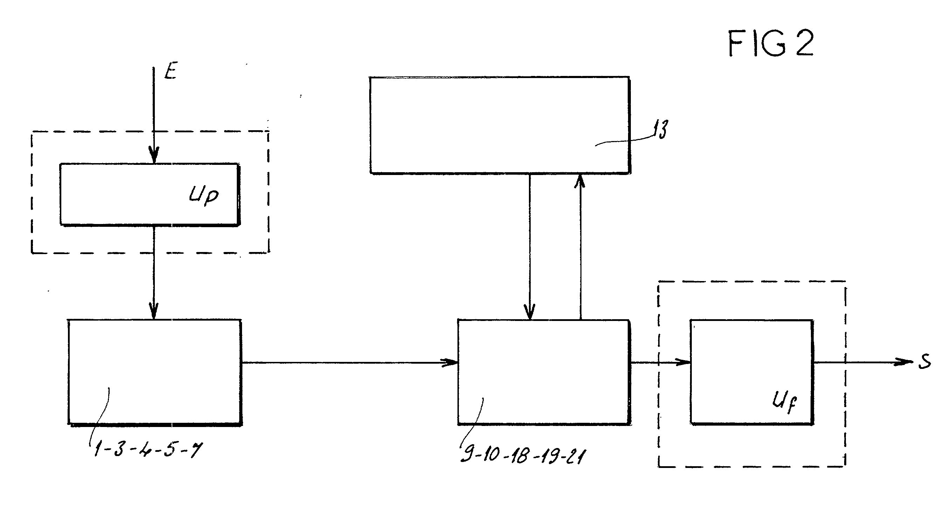

Selon un exemple de réalisation schématisé par exemple à la figure 2, l'installation d'épuration comprend une unité de prétraitement Up par filtration, en amont de la cuve de réception 1 et une unité de traitement de finition Uf, par exemple par filtration alimentée par le moyen d'évacuation. L'unité de prétraitement Up est par exemple une unité de filtration constituée d'un assemblage de grilles successives à mailles décroissantes.

L'installation conforme à l'invention comprend des moyens de pilotage permettant de faire fonctionner chaque pompe 3, 7, 10 et 21 par séquence et de façon différenciée l'une par rapport à l'autre. Ces fonctionnements se font selon des fréquences et des cycles prédéterminés.

Selon un exemple de réalisation, les conduites de transfert 8 et d'évacuation 22 sont pourvues respectivement de vannes 30 et 32. La conduite de dérivation 18 comporte également une vanne 18b qui, en combinaison avec une vanne 31 de la conduite de recyclage 11, permettent de réguler la répartition sur le filtre gravillonnaire 13, et de contrôler le débit de liquide excédentaire vers la cuve de recyclage 9.

Selon un exemple de réalisation conforme à l'invention, la cuve de réception 1 présente une capacité de 6 m³ et la cuve de recyclage présente une capacité de 4 m³. La pompe d'aération 3 génère, par exemple, un débit de 20 m³/h à 0,1 bar et la pompe de recyclage 10 génère, par exemple, un débit de 10 m³/h à 0,3 bar.

Le filtre gravillonnaire 13 présente, par exemple, une forme cylindrique, un diamètre de 6 m, et une surface d'arrosage d'environ 28 m². L'épaisseur du matériau 16 de filtration est d'environ 0,9 m.

Les performances épuratoires d'un tel filtre gravillonnaire 13, sont de l'ordre de 50% d'abattement de la DCO par passage et pouvant atteindre 95% à l'échelle d'une journée.

L'installation conforme à l'invention permet de mettre en oeuvre un procédé d'épuration d'effluents vinicoles de manière à pouvoir les rejeter dans certains cas au milieu naturel.

Selon le procédé conforme à l'invention, on récupère les effluents vinicoles de la journée dans la cuve de réception 1. Les effluents contenus dans la cuve de réception 1 sont brassés et aérés. A la fin de la journée et après un temps de repos d'environ 2 heures sans aération, sans brassage ni arrivée d'effluents par la conduite 2 où s'opère une décantation, le volume liquide situé au-dessus du niveau 6 de remplissage, et correspondant au volume émis tout au long de la journée est transféré vers la cuve de recyclage 9. La décantation permet de conserver dans la cuve de réception 1 des micro organismes en suspension qui participent à la dégradation carbonée aérobie. Ce transfert se fait de façon séquentielle tous les jours lors d'une phase de repos sans arrivée d'eau à traiter dans la cuve de réception 1 pour ne pas perturber la décantation avec l'arrivée d'eau à traiter. A titre d'exemple, on arrive à diminuer de 30% la concentration en charges polluantes dans les effluents vinicoles avant leur transfert vers la cuve de recyclage 9.

Après un tel transfert, la cuve de réception 1 se remplit à nouveau progressivement d'autres effluents vinicoles. Une fois transférés dans la cuve de recyclage 9 les effluents vinicoles sont également aérés dans ladite cuve de recyclage 9.

Une partie des effluents vinicoles contenus dans la cuve de recyclage 9 est ensuite puisée pendant plusieurs cycles de traitement successifs en partie basse de ladite cuve de recyclage 9 pour alimenter le filtre gravillonnaire 13 servant de support au biofilm. Les effluents filtrés sont ensuite récupérés dans la cuve de recyclage 9.

Entre chaque cycle de traitement correspondant à l'arrosage du filtre gravillonnaire 13 par une quantité donnée d'effluents, on laisse un temps de repos sans alimentation du filtre gravillonnaire 13. Ce temps de repos permet de vider le garnissage chargé d'effluents vinicoles et de l'aérer et donc d'oxygéner le biofilm fixé sur le garnissage par circulation ou diffusion naturelle d'air à travers le garnissage. L'aération réalisée dans la cuve 9 en parallèle à l'aspersion du filtre gravillonnaire 13 permet d'envoyer sur le filtre 13 des effluents pré-oxygénés, limitant ainsi la nécessité d'avoir recours à de telles phases de repos pour le filtre 13.

Le circuit de recirculation permettant d'obtenir les différents cycles de traitement successifs est mis en fonctionnement pendant une durée d'environ 22 heures correspondant à la durée de remplissage de la cuve de réception 1. Après une telle période de traitements successifs, une partie des effluents vinicoles contenus dans la cuve de recyclage 9 et plus précisément après un temps de repos d'environ 2 heures sans aération ni brassage où s'opère une décantation, le volume liquide situé au-dessus du niveau 20 de remplissage, et corrrespondant au volume de transféré depuis la vue de réception 1 est évacué, vers le milieu naturel dans certains cas. La décantation permet de conserver dans la cuve de recyclage 9 les matières en suspension pour une meilleure protection du milieu naturel.

La quantité d'effluents vinicoles traités correspond sensiblement à la quantité d'effluents vinicoles transférés de la cuve de réception 1 vers la cuve de recyclage 9. A titre d'exemple, le filtre gravillonnaire 13 est alimenté par les effluents vinicoles pendant 12 cycles d'alimentation correspondant à environ 30 minutes de pompage par cycle de la pompe de recyclage 10 et ce, réparti sur 22 heures. Ceci correspond, par exemple, à une utilisation de l'installation d'épuration en période de pointe.

En dehors des périodes de pointe d'activité de l'unité de production correspondant aux vendanges et soutirages, en période de faible activité, il est possible de répartir sur 22 heures, 4 cycles d'alimentation du filtre gravillonnaire 13, correspondant à une durée de pompage de la pompe de recyclage 10 d'une heure par cycle. Là encore il convient de laisser décanter les effluents vinicoles traités de cette façon pendant une durée d'environ 2 heures avant leur évacuation.

Il est évident que les durées, débits et volumes peuvent être adaptés à chaque cas particulier, et notamment en adaptant les puissances de pompage des différentes pompes 3, 10, 7 et 21.

Ce procédé est particulièrement intéressant dans la mesure où le filtre gravillonnaire 13 nécessite un entretien minimal. En effet, la biomasse accumulée notamment pendant la période de pointe dans le filtre gravillonnaire 13, et ce par exemple pendant la période de vendanges, s'étalant sur une période d'environ deux mois, est autodigérée par les bactéries contenues dans le matériau 16 de garnissage, pendant la période hors vendanges, c'est-à-dire hors période de pointe, pendant laquelle il n'y a qu'un très faible apport en charges organiques ou polluantes. Cette période correspondant à une activité réduite d'environ 8 à 10 mois permet ainsi une stabilisation aérobie du biofilm et permet au filtre gravillonnaire 13 de s'auto-nettoyer et d'éviter ainsi tout colmatage Il n'y a donc pas de biomasse excédentaire à traiter. L'efficacité du filtre gravillonnaire 13 est en outre améliorée par la présence des ouïes d'aération 15 autorisant un apport en air et par conséquent en oxygène dans le matériau 16 de garnissage.

Le procédé d'épuration peut également consister à faire traverser par les effluents vinicoles une unité de prétraitement Up avant leur récupération dans la cuve de réception 1. Le procédé peut également consister à faire traverser par les effluents traités et évacués de la cuve de recyclage 9 une unité de traitement de finition Uf. Cette dernière peut également être constituée d'une unité de filtration.

Le procédé d'épuration conforme à l'invention consiste également à commander la fréquence et la durée des cycles de traitement successifs d'une part, et à commander les fréquences de transfert d'une partie des effluents de la cuve de réception 1 vers la cuve de recyclage 9, d'autre part. Ceci permet de s'adapter par exemple au dimensionnement des cuves 1 et 9 et du filtre gravillonnaire 13, de même qu'aux débits des diverses pompes 3, 7, 10 et 21 ainsi qu'aux capacités ou aux propriétés de filtration du matériau 16.

A titre de variante du procédé conforme à l'invention, il est possible, par exemple, pour des effluents vinicoles dont la teneur en charges polluantes est réduite ou en deçà d'un certain seuil, de ne pas utiliser l'aération dans la cuve de réception 1.

De la même manière, l'aération complémentaire dans la cuve de recyclage 9 peut ne pas être utilisée dans la mise en oeuvre du procédé conforme à l'invention.

## Revendications

1. Installation pour épurer des effluents vinicoles comprenant :
- une cuve de réception (1) pour effluents vinicoles,
- un moyen d'aération des effluents contenus dans la cuve de réception (1),
- un moyen pour transférer, de façon séquentielle, les effluents de la cuve de réception (1) dans sa partie haute, au-dessus d'un niveau (6) prédéterminé, pour transférer lesdits effluents dans une cuve de recyclage (9),
- un circuit de recirculation associé à la cuve de recyclage (9), comportant une pompe de recyclage (10) pour faire circuler les effluents vers un filtre gravillonnaire (13) servant de support à un biofilm, les effluents filtrés étant récupérés à la sortie du filtre gravillonnaire (13) et ramenés dans la cuve de recyclage (9),
- un moyen d'aération complémentaire associé à la cuve de recyclage (9) pour aérer les effluents contenus dans celle-ci,
- et un moyen d'évacuation des effluents traités de la cuve de recyclage (9), agencé dans sa partie haute, au-dessus d'un niveau (20) prédéterminé.

2. Installation selon la revendication 1, **caractérisée en ce que** le filtre gravillonnaire (13) est un filtre à pouzzolane, dont la granulométrie est comprise entre 6 et 10 mm.

3. Installation selon la revendications 1 ou 2, **caractérisée en ce que** le moyen de transfert est une pompe de transfert (7).

4. Installation selon l'une quelconque des revendications 1 à 3, **caractérisée en ce que** le moyen d'aération comprend une pompe (3) d'aspiration directe située dans la partie basse de la cuve de réception (1), avec une conduite de refoulement (4) dirigée dans la cuve de réception (1), ladite conduite de refoulement (4) comportant un Venturi (5) à faible débit, au niveau duquel de l'air est admis.

5. Installation selon l'une quelconque des revendications 1 à 4, **caractérisée en ce que** le moyen d'aération complémentaire est réalisé avec une conduite de dérivation (18) connectée sur le circuit de recirculation en amont du filtre gravillonnaire (13) et dirigée dans la cuve de recyclage (9), ladite conduite de dérivation (18) comportant un Venturi (19) à faible débit au niveau duquel de l'air est admis, ledit circuit de recirculation aspirant les effluents dans la partie basse de la cuve de recyclage (9).

6. Installation selon l'une quelconque des revendications 1 à 5, **caractérisée en ce qu'**elle comprend des moyens de pilotage permettant de faire fonctionner de façon séquentielle chaque pompe (3, 7, 10, 21), et de façon différenciée l'une par rapport à l'autre.

7. Installation selon l'une quelconque des revendications 1 à 6, **caractérisée en ce qu'**elle comprend une unité de prétraitement par filtration (Up) en amont de la cuve de réception (1) et une unité de traitement de finition (Uf), par exemple par filtration, alimentée par le moyen d'évacuation.

8. Procédé d'épuration d'effluents vinicoles **caractérisé en ce qu'**il consiste à :
- récupérer des effluents vinicoles dans une cuve de réception (1),
- laisser reposer et décanter et le cas échant aérer au préalable les effluents vinicoles dans la cuve de réception (1),
- transférer de façon séquentielle une partie des effluents en partie haute de la cuve de réception (1) vers une cuve de recyclage (9),
- aérer le cas échéant les effluents dans la cuve de recyclage (9),
- puiser pendant plusieurs cycles de traitement successifs une partie des effluents, en partie basse de la cuve de recyclage (9), pour alimenter un filtre gravillonnaire (13) servant de support à un biofilm,
- récupérer les effluents filtrés dans la cuve de recyclage (9),
- laisser reposer et décanter les effluents dans la cuve de recyclage (9),
- et évacuer une partie des effluents traités en partie haute de la cuve de recyclage (9).

9. Procédé d'épuration selon la revendication 8, **caractérisé en ce qu'**il consiste à faire traverser par les effluents une unité de prétraitement (Up) avant leur récupération dans la cuve de réception (1).

10. Procédé d'épuration selon la revendication 8 ou 9, **caractérisé en ce qu'**il consiste à faire traverser par les effluents traités et évacués de la cuve de recyclage (9), une unité de traitement de finition (Uf).

11. Procédé d'épuration selon les revendications 9 et 10, **caractérisé en ce qu'**il consiste à utiliser des unités de filtration pour réaliser les unités de prétraitement (Up) et de traitement de finition (Uf).

12. Procédé d'épuration selon l'une quelconque des revendications 8 à 11, **caractérisé en ce qu'**il consiste à commander la fréquence et la durée des cycles de traitements successifs d'une part, et à commander les fréquences de transfert d'une partie des effluents de la cuve de réception (1) vers la cuve de recyclage (9), d'autre part.
